# EUROPÄISCHE PATENTSCHRIFT

(11) **EP 3 443 360 B1**
(45) Veröffentlichungstag und Bekanntmachung des Hinweises auf die Patenterteilung: **10.04.2024**
(21) Anmeldenummer: 17717654.2
(22) Anmeldetag: 10.04.2017
(51) Int. Cl.: G01P 5/26, G01P 13/02, G01J 3/02, G01J 3/12, G01J 3/36, G01J 3/42, G01J 3/28, G01N 21/3504, G01N 21/39

(54) **LUFTFAHRZEUG UND VERFAHREN ZUR ERMITTLUNG VON FLUGRELEVANTEN KENNGRÖSSEN**
AIRCRAFT AND METHOD FOR DETERMINING FLIGHT-RELEVANT PARAMETERS
AÉRONEF ET PROCÉDÉ DE DÉTERMINATION DE GRANDEURS CARACTÉRISTIQUES IMPORTANTES POUR LE VOL

(30) Priorität: 15.04.2016 DE 202016102010 U
(43) Veröffentlichungstag der Anmeldung: 20.02.2019
(73) Patentinhaber: Deutsches Zentrum für Luft- und Raumfahrt e.V., 51147 Köln (DE)
(72) Erfinder: MAHNKE, Peter, 70195 Stuttgart (DE)
(74) Vertreter: DTS Patent- und Rechtsanwälte Schnekenbühl und Partner mbB
(86) Internationale Anmeldenummer: PCT/EP2017/058493
(87) Internationale Veröffentlichungsnummer: WO 2017/178402

(56) Entgegenhaltungen:
- WO-A1-2013/181687
- WO-A1-2013/181687
- WO-A2-99/35519
- WO-A2-99/35519
- WO-A2-2006/050169
- WO-A2-2006/050169
- WO-A2-2006/050169
- DE-A1-102010 019 811
- DE-A1-102010 019 811
- US-A- 2 402 618
- US-A- 2 402 618
- US-A- 2 402 618
- US-A- 4 483 614
- US-A- 4 483 614
- US-A- 4 483 614
- US-A1- 2005 213 192
- US-A1- 2005 213 192
- US-A1- 2014 354 991
- US-A1- 2014 354 991
- US-B1- 6 753 960
- US-B1- 6 753 960
- PHILIPPE L C ET AL: "LASER DIODE WAVELENGTH-MODULATION SPECTROSCOPY FOR SIMULTANEOUS MEASUREMENT OF TEMPERATURE, PRESSURE, AND VELOCITY IN SHOCK-HEATED OXYGEN FLOWS", APPLIED OPTICS, OPTICAL SOCIETY OF AMERICA, WASHINGTON, DC; US, Bd. 32, Nr. 30, 20. Oktober 1993 (1993-10-20), Seiten 6090-6103, XP000398609, ISSN: 0003-6935, DOI: 10.1364/AO.32.006090
- PHILIPPE L C ET AL: "LASER DIODE WAVELENGTH-MODULATION SPECTROSCOPY FOR SIMULTANEOUS MEASUREMENT OF TEMPERATURE, PRESSURE, AND VELOCITY IN SHOCK-HEATED OXYGEN FLOWS", APPLIED OPTICS, OPTICAL SOCIETY OF AMERICA, WASHINGTON, DC; US, vol. 32, no. 30, 20 October 1993 (1993-10-20), pages 6090-6103, XP000398609, ISSN: 0003-6935, DOI: 10.1364/AO.32.006090

## Beschreibung

Die Erfindung betrifft ein Luftfahrzeug, das eine optische spektroskopische Sensorvorrichtung zur Ermittlung von flugrelevanten Kenngrößen einer Umgebungsatmosphäre des Luftfahrzeuges umfasst, insbesondere der Temperatur, des Druckes und/oder der Feuchte.

Die vorliegende Erfindung betrifft ferner ein Verfahren zur Ermittlung von flugrelevanten Kenngrößen einer Umgebungsatmosphäre eines Luftfahrzeuges.

Die zuverlässige und korrekte Ermittlung von flugrelevanten Kenngrößen der Umgebungsatmosphäre eines Luftfahrzeugs ist von essentieller Bedeutung für die Flugsicherheit. Besondere Bedeutung kommt beispielsweise dem Druck zur Ermittlung der Flughöhe/Flugfläche und der Fluggeschwindigkeit vor, gemessen über den statischen Druck bzw. zusätzlich den Staudruck. Als problematisch erweist sich jedoch beispielsweise bereits eine zuverlässige Bestimmung des statischen Drucks bei hohen Fluggeschwindigkeiten, allerdings müssen auch bei eher geringen Fluggeschwindigkeiten Korrekturmessungen zur Ermittlung der kalibrierten und wahren Eigengeschwindigkeit durchgeführt werden. Diese Korrekturrechnungen unterliegen auch dem Einfluss von Abweichungen der Atmosphäre von der Standardatmosphäre, so dass unter Einbeziehung von Bestimmungen der Temperatur, der Dichte, der Feuchte und des Aerosolgehaltes (optische Dichte) eine umfassende Sammlung von Kenngrößen wünschenswert ist.

"Kenngröße" bezieht sich vorliegend auf den Wert des entsprechenden Parameters, insbesondere des Druckes, der Temperatur, und/oder der Feuchte.

Es sind bereits optische spektroskopische Sensorvorrichtungen zur Ermittlung von Kenngrößen bei bewegtem Luftfahrzeug bekannt. Derartige Sensorvorrichtungen setzen speziell auf Laser-Raman-Messungen, beispielsweise in Raman-LiDAR-Systemen unter Auswertung von Rückstreuungssignalen. Dabei kommen gepulste Laserlichtquellen hoher Intensität zum Einsatz. Hierin besteht ein potentielles Sicherungsrisiko für Personen, wenn sich das Luftfahrzeug am Boden befindet, zumal die eingesetzten Lichtquellen üblicherweise Licht jenseits des sichtbaren Spektrums emittieren. Es bestehen daher hohe Aufforderungen, die Augensicherheit zu gewährleisten.

In der WO 2006/050169 A2 sind eine Vorrichtung und ein Verfahren zur Ermittlung flugrelevanter Kenngrößen beschrieben. Dabei werden Intensitätsmessungen von zumindest zwei Absorptionslinien zur Bestimmung eines Verhältnisses durchgeführt, das mit der Kenngröße verknüpft ist.

In der WO 2013/181687 A1 sind ein Verfahren und ein System zum Bestimmen einer Geschwindigkeit einer Relativbewegung zwischen einem Objekt und einem fluidischen Medium beschrieben. Zu diesem Zweck werden Absorptionsmessungen mit Dopplerverschiebungen infolge der Relativbewegung durchgeführt.

Die US 4,483,614 beschreibt ein System zum Messen von Luftgeschwindigkeitsdaten und Parametern wie beispielsweise Dichte, Druck und/oder barometrische Höhe.

Anwendungen von Wellenlängenmodulationsspektroskopie unter Einsatz von Laserdioden für die simultane Messung von Temperatur, Druck und Geschwindigkeit in Strömen sind im Fachartikel Philippe et al. "Laser Diode Wavelength-Modulation Spectroscopy for Simultaneous Measurement of Temperature, Pressure, and Velocity in Shock-Heated Oxygen Flows", Applied Optics, Optical Society of America, Washington, DC; US, Bd. 32, Nr. 30 beschrieben.

Aufgabe der vorliegenden Erfindung ist es, ein Luftfahrzeug mit einer Sensorvorrichtung bereitzustellen, bei dem eine zuverlässige und benutzersichere Ermittlung von flugrelevanten Kenngrößen möglich ist.

Diese Aufgabe wird durch ein erfindungsgemäßes Luftfahrzeug mit den Merkmalen von Anspruch 1 gelöst.

Die Sensorvorrichtung des erfindungsgemäßen Luftfahrzeuges ist als Absorptionsmessvorrichtung ausgestaltet. In Ausbreitungsrichtung der von der Sendeeinrichtung emittierten Strahlung zur Detektionseinrichtung ist am Luftfahrzeug eine Messstrecke gebildet oder definiert, die von den Lichtsignalen durchlaufen wird. Aus diesem Grund können Licht- und insbesondere Laserlichtquellen von verhältnismäßig geringer Energie und/oder Intensität in der Sendeeinrichtung zum Einsatz kommen. Sogar der Einsatz von cw-(continuous wave)-Lichtquellen ist denkbar. Es kann eine augensichere Sensorvorrichtung eingesetzt werden.

Die Sensorvorrichtung kann ergänzend zu herkömmlichen Mess- oder Sensorvorrichtungen des Luftfahrzeuges zur redundanten Datenerfassung zum Einsatz kommen. Dies gibt die Möglichkeit, durch eine Plausibilitätsprüfung und Kontrolle unterschiedlicher Datensätze eine genauere Aussage über die Werte der Kenngrößen treffen zu können, um die Flugsicherheit zu steigern.

Von Vorteil ist es, dass mit der Sensorvorrichtung eine Relativgeschwindigkeit des Luftfahrzeuges zur Umgebungsatmosphäre feststellbar ist, wobei eine Doppler-Verschiebung zumindest eines Übergangs eines in der Umgebungsatmosphäre enthaltenen Gases ermittelt wird. Dabei ist die Messstrecke beispielsweise so ausgerichtet, dass sie im Winkel unterschiedlich zu 90° zur Strömungsrichtung ausgerichtet ist. Beispielsweise erstreckt sich die Messstrecke in diesem Fall vom vorderen Rumpfbereich zu einem Flügelende und/oder umgekehrt.

Die Sensorvorrichtung umfasst eine Referenzmessstrecke mit einem Gehäuse und darin enthaltenem Gas oder Gasgemisch, wobei ein Teil an von der Sendeeinrichtung an die Detektionseinrichtung ausgesandter Strahlung durch die Referenzmessstrecke geführt ist. Das Gas oder Gasgemisch der Referenzmessstrecke kann insbesondere eine definierte Temperatur und einen vorgegebenen Druck aufweisen und als Referenz für die Wellenlänge der Lichtquelle dienen, günstigerweise auch als Referenz für die druckabhängige Linienverbreiterung, und dient als nicht-dopplerverschobene Referenz von Übergängen im Gas oder Gasgemisch.

Die Referenzmessstrecke ist bevorzugt im Luftfahrzeug angeordnet.

Günstig ist es, wenn die Sensorvorrichtung derart am Luftfahrzeug positioniert ist, dass die Messstrecke außerhalb oder im Wesentlichen außerhalb einer an die Außenhaut grenzenden Strömungsschicht verläuft. Darunter kann vorliegend insbesondere verstanden werden, dass die Messtrecke außerhalb von durch die Strömung beeinflussten Bereichen, die an die Außenhaut angrenzen, verläuft. Dadurch kann eine weitgehend von der Strömung unbeeinflusste Bestimmung der Kenngrößen durchgeführt werden. Insbesondere ist es von Vorteil, wenn die Sensorvorrichtung derart positioniert ist, dass die Messstrecke nicht im Bereich von Abschnitten des Luftfahrzeugs verläuft, an denen die Strömung gestaut wird oder sich vom Luftfahrzeug ablöst, d.h. an Staupunkten oder Ablösepunkten der Tragflügel oder des Leitwerks.

Vorzugsweise umfasst die Sensorvorrichtung eine Reflexionseinrichtung, die in die Messstrecke integriert ist zur Reflexion von Strahlung der Sendeeinrichtung in Richtung der Detektionseinrichtung. Die Messstrecke lässt sich dadurch zur genaueren Ermittlung der Kenngrößen konstruktiv einfach verlängern. Als Reflexionseinrichtung kann beispielsweise ein Spiegel, ein Retroreflektor, eine Reflexionsfolie oder dergleichen zum Einsatz kommen.

Bei der zuletzt genannten vorteilhaften Ausführungsform ist günstigerweise vorgesehen, dass die Sendeeinrichtung und die Detektionseinrichtung in ein gemeinsames Gehäuse integriert sind, um eine kompakte Bauform der Sensorvorrichtung zu ermöglichen.

Besonders vorteilhafterweise kann die Sendeeinrichtung die Detektionseinrichtung umfassen oder ausbilden.

Als vorteilhaft erweist es sich bei Umsetzungen des Luftfahrzeuges, wenn die Sendeeinrichtung und/oder die Detektionseinrichtung und/oder die Reflexionseinrichtung folgendermaßen am Luftfahrzeug positioniert sind:
- am Rumpf, insbesondere an einem vorderen Rumpfbereich und/oder an einer Oberseite des Rumpfes;
- an einem Tragflügel, beispielsweise dessen Oberseite oder Unterseite, vorzugsweise an einem Flügelendkörper (Winglet etc.);
- an einem Leitwerk, insbesondere an einer Seitenflosse oder Höhenflosse.

Die Positionierung der Sende-, Detektions- oder Reflexionseinrichtung auf vorstehend genannte Weise erlaubt es, eine möglichst große Messstrecke am Luftfahrzeug zu bilden. Bei einer besonders vorteilhaften Ausführungsform können zur Erzielung einer möglichst langen Messstrecke eine Sendeeinrichtung an einem vorderen Rumpfbereich und eine Detektionseinrichtung an einem Flügelendkörper oder umgekehrt positioniert sein. Noch vorteilhafter ist die Positionierung der Reflexionseinrichtung am Flügelendkörper und der Sende- und Detektionseinrichtung am vorderen Rumpfbereich oder umgekehrt.

Vorzugsweise sind die Sendeeinrichtung und/oder die Detektionseinrichtung in die Außenhaut integriert, um die Strömung am Luftfahrzeug nicht zu beeinflussen. Beispielsweise fluchtet ein Austrittsfenster der Sendeeinrichtung oder ein Eintrittsfenster der Detektionseinrichtung mit der Außenhaut.

Vorteilhafterweise umfasst die Sensorvorrichtung mindestens eine Heizeinrichtung zum Beheizen der Sendeeinrichtung und/oder der Detektionseinrichtung. Insbesondere kann ein Fenster der Sendeeinrichtung und/oder ein Fenster der Detektionseinrichtung beheizbar sein, um Tau- oder Reifbildung zu verhindern.

Von Vorteil ist es, wenn mit der Sensorvorrichtung feststellbar ist, ob Strahlung der Sendeeinrichtung positionsgenau auf die Detektionseinrichtung ausgerichtet ist, und wenn die Sensorvorrichtung eine Stelleinrichtung aufweist, die mit der Sendeeinrichtung und/oder der Detektionseinrichtung zum Nachführen der Strahlung in Richtung auf die Detektionseinrichtung gekoppelt ist. Insbesondere ist eine Steuerung und/oder Regelung mit der Stelleinrichtung möglich, und die positionsgenaue Ausrichtung der Strahlung ist auf die Detektionseinrichtung sicherzustellen. Eine Anordnung der Sende-, Detektions- oder Reflexionseinrichtung an einem Tragflügel kann bei dessen Schwingungen beispielsweise zu einem Versatz der Strahlung führen, der mittels der Stelleinrichtung ausgeglichen werden kann, um die Funktion der Sensorvorrichtung dauerhaft sicherzustellen. Eine Nachführung der Strahlung kann mechanisch erfolgen, z. B. durch Bewegen der Sendeeinrichtung, der Detektionseinrichtung und/oder der Reflexionseinrichtung, oder auch optisch. Es kann direkt oder indirekt, beispielsweise über einen ausgekoppelten Strahlungsanteil, ermittelt werden, ob die Strahlung positionsgenau auf die Detektionseinrichtung ausgerichtet ist.

Beispielsweise ist vorgesehen, dass ein Leuchtfleck der von der Sendeeinrichtung auf die Detektionseinrichtung gerichteten Strahlung mit einer Kamera erfassbar ist. Die Kamera kann mit einer Steuerung signalwirksam gekoppelt sein, die ihrerseits ein Stellsignal an die Stelleinrichtung übermitteln kann.

Alternativ oder ergänzend ist es günstig, wenn die Detektionseinrichtung einen Detektor mit einer Mehrzahl von Detektionsbereichen aufweist, beispielsweise einen Vier-Quadranten-Detektor. Die Strahlung kann so auf den Detektor ausgerichtet sein, dass die einzelnen Detektionsbereiche gleichermaßen von der Strahlung erfasst sein sollten. Eine Strahlverlagerung führt zu unterschiedlicher Gewichtung der Signale der einzelnen Detektionsbereiche. Dies kann zum Beispiel von einer mit der Stelleinrichtung gekoppelten Steuereinrichtung überprüft und diese daraufhin mit einem Stellsignal zum Nachführen der Strahlung angesteuert werden.

Die Sendeeinrichtung weist bevorzugt zumindest eine Laserlichtquelle auf. Deren Intensität ist günstigerweise noch innerhalb des augensichersten Bereiches für gerichtete kohärente Strahlung. Es können unterschiedliche Laserlichtquellen zum Einsatz kommen, beispielsweise DFB-Laser (Distributed Feedback), Bragg-Laser (DBR-Laser), VCSEL (Oberflächenemitter) etc.

Insgesamt ist der Einsatz von schmalbandigen Diodenlasern zur Spektroskopie an Bestandteilen der Umgebungsatmosphäre vorteilhaft. Zur Modulation der Laserlichtquellen, daran wird nachfolgend noch eingegangen, können an sich bekannte Diodentreiber, elektro- und/oder akusto-optische Modulatoren oder dergleichen zum Einsatz kommen.

Günstig ist es, wenn zwei oder mehr Kenngrößen anhand der Strahlung derselben Laserlichtquelle bestimmbar sind, wodurch die Sensorvorrichtung sich als vielseitig erweist.

Vorteilhafterweise sind zumindest zwei Kenngrößen simultan bestimmbar. Darunter wird vorliegend insbesondere verstanden, dass die Strahlung sich zur selben Zeit über die Messstrecke ausbreiten kann. optische Strahlungstrennelemente wie Filter, insbesondere dichroitische Filter, optische Gitter etc. können zur Trennung unterschiedlicher Wellenlängen eingesetzt werden.

Günstig ist es, wenn die Sendeeinrichtung einen optischen Multiplexer aufweist, über den die Strahlung mehr als einer Lichtquelle der Sendeeinrichtung in die Messstrecke einkoppelbar ist, und wenn die Detektionseinrichtung einen optischen Demultiplexer aufweist, über den die Strahlung unterschiedlicher Lichtquellen voneinander separierbar ist. Beispielsweise können Faserein- oder -auskoppler zum Einsatz kommen, ebenso wie die bereits erwähnten Filter.

Zur Unterdrückung von Streulicht oder Hintergrundstrahlung können Blenden und/oder Optiken geringer Apertur zum Einsatz kommen. Insbesondere kann die Lichtstrahlung auch moduliert werden, um störende Lichteinflüsse zu vermeiden.

Die Sensorvorrichtung ist vorzugsweise zum Bestimmen von einer Kenngröße an gasförmigem Sauerstoff, Kohlendioxid, Methan und/oder Wasser geeignet.

Wie eingangs bereits erwähnt ist mittels der Sensorvorrichtung vorzugsweise die Temperatur, der Druck und/oder die Feuchte bestimmbar. Günstigerweise ist auch ein Aerosolgehalt in der Luft bestimmbar.

Bei einer Bestimmung des Druckes kann ein beliebiger Bezugsdruck (Druckhöhe) als Referenz herangezogen werden, bezüglich dessen der Druck der Umgebungsatmosphäre bestimmt werden kann. Der Bezugsdruck ergibt sich insbesondere nach der Standardatmosphäre.

Die Temperatur der Umgebungsatmosphäre ist mit der Sensorvorrichtung günstigerweise bestimmbar, wobei das Verhältnis der Intensitäten zumindest zweier energetischer Übergänge in einem Gas der Umgebungsatmosphäre ermittelt wird. Dabei werden zwei energetische Übergänge des Gases spektroskopiert und die jeweilige Intensität eines Überganges bestimmt. Ein jeweiliger Übergang kann in seiner Intensität gegen den Hintergrund gemessen werden. Das Verhältnis der Intensitäten, das temperaturabhängig ist, kann berechnet und aus dem Ergebnis die Temperatur bestimmt werden. Beispielsweise wird die Temperatur durch eine Messung an Sauerstoff bestimmt, wobei Rotationsschwingungsübergänge im Bereich von ungefähr 700 Nanometer bis 800 Nanometer herangezogen werden können. Beispielsweise werden die 763 Nanometer- und die 767 Nanometer-Linie spektroskopiert.

Von Vorteil ist es, wenn mit der Sensorvorrichtung die Feuchte der Umgebungsatmosphäre bestimmbar ist, wobei die Intensität zumindest eines energetischen Übergangs in der Umgebungsatmosphäre enthaltenen Wasserdampfes ermittelt wird. Dabei wird beispielsweise ein Übergang der 1400 Nanometer-Linie oder der 935 Nanometer-Linie spektroskopiert und gegen den Hintergrund gemessen. Vorzugsweise wird das Signal über die Breite der Linie integriert, um den Feuchtegehalt der Umgebungsatmosphäre zu ermitteln. Dabei kann insbesondere berücksichtigt werden, dass eine Druckabhängigkeit des energetischen Überganges zwar bestehen kann, wodurch sich eine Verbreiterung des Überganges ergibt, das Integral über den gesamten Übergang jedoch konstant ist und sich zur Berechnung der Linienstärke und damit des Feuchtegehaltes eignet.

Günstigerweise ist mit der Sensorvorrichtung der Druck der Umgebungsatmosphäre bestimmbar, wobei die Intensität zumindest eines energetischen Übergangs in der Umgebungsatmosphäre enthaltenen Gases ermittelt wird. Dabei ist insbesondere eine jeweilige Intensität des Übergangs mittels Strahlung in zumindest zweierlei modulierter Weise ermittelbar, und das Verhältnis beider Intensitäten kann ermittelt werden. Es ist beispielsweise möglich, dass ein jeweiliger Übergang hinsichtlich seiner Linienform und/oder Linienstärke gegen den Hintergrund gemessen werden kann. Eine üblicherweise vorhandene Temperaturabhängigkeit kann bei der Bestimmung herangezogen werden, wobei die Temperatur zum Beispiel wie vorstehend erläutert berechnet werden kann. Beispielsweise wird der Druck durch eine Messung an Sauerstoff bestimmt. Durch Messung mit zweierlei unterschiedlicher Modulation und anschließende Verhältnisbildung beider Intensitäten ist es möglich, das Signalzu-Rauschverhältnis zu verbessern und den Druck zuverlässiger zu bestimmen. Möglich ist Wellenlängenmodulation, beispielsweise im Kilohertzbereich, und/oder Frequenzmodulation durch einen elektrooptischen Modulator. Über eine Steuereinrichtung können ein entsprechender Modulator und ein Diodentreiber von Laserlichtquellen angesteuert werden. Referenzsignale können detektionsseitig zur Datenauswertung auf Lock-in-Verstärker eingekoppelt werden.

Beispielsweise ist die Sensorvorrichtung so ausgebildet, dass eine f/2f-Modulationspektroskopie oder eine two-tone-Modulationsspektroskopie durchführbar ist.

Als günstig erweist es sich bei einem einen Tragflügel aufweisenden Luftfahrzeug, wenn der Druck oberhalb und unterhalb des Tragflügels bestimmbar und daraus der Differenzdruck feststellbar ist, und wenn bei Unterschreiten eines Schwellenwertdifferenzdrucks ein Hinweis betreffend einen zu geringen Auftrieb ausgebbar ist. Weichen die Drücke oberhalb und unterhalb des Tragflügels voneinander um einen geringeren als den Schwellenwertdruck, deutet dies darauf hin, dass der Auftrieb am Tragflügel zu gering ist und insbesondere ein Strömungsabriss droht. Über einen entsprechenden Hinweis kann der Luftfahrzeugführer darauf aufmerksam gemacht werden. Der Schwellenwertdruck kann auch neigungsabhängig unterschiedlich sein, bezogen auf die Längsrichtung des Luftfahrzeuges, um unterschiedlichen Anforderungen an den Auftrieb abhängig von der Fluglage Rechnung zu tragen.

Vorzugsweise ist ein Hinweis ausgebbar, wenn sich die Relativgeschwindigkeit von einer Überziehgeschwindigkeit des Luftfahrzeugs um weniger als eine Mindestgeschwindigkeitsdifferenz unterscheidet. Beispielsweise kann über den Hinweis erforderlichenfalls eine Strömungsabrisswarnung an den Luftfahrzeugführer ausgegeben werden.

Von Vorteil ist es, wenn zum Bestimmen des Aerosolgehaltes die Extinktion der Strahlung von zumindest zwei Strahlungsquellen der Sendeeinrichtung ermittelbar ist, um den Einfluss von streuenden Partikeln in der Umgebungsatmosphäre, der nicht auf eine druckabhängige Absorption der Strahlung zurückzuführen ist, zu bestimmen.

Vorteilhafterweise ist die Sensorvorrichtung so ausgebildet, dass die Bestimmung der Temperatur und des Druckes der Umgebungsatmosphäre mit derselben Lichtquelle der Sendeeinrichtung an demselben Gas durchführbar ist, beispielsweise an Sauerstoff.

Wie eingangs erwähnt, betrifft die vorliegende Erfindung auch ein Verfahren. Das erfindungsgemäße Verfahren mit den Merkmalen des unabhängigen Anspruches 15 dient zur Ermittlung von flugrelevanten Kenngrößen einer Umgebungsatmosphäre eines Luftfahrzeugs, insbesondere der Temperatur, des Druckes und/oder der Feuchte, unter Verwendung einer optischen spektroskopischen Sensorvorrichtung.

Die Vorteile, die bereits im Zusammenhang mit der Erläuterung des erfindungsgemäßen Luftfahrzeugs erwähnt wurden, können unter Einsatz des Verfahrens ebenfalls erzielt werden. Vorteilhafte Ausführungsbeispiele des Verfahrens ergeben sich durch vorteilhafte Ausführungsformen des Luftfahrzeugs. Zur Vermeidung von Wiederholungen kann auf voranstehende Ausführungen verwiesen werden.

Die nachfolgende Beschreibung bevorzugter Ausführungsformen der Erfindung dient im Zusammenhang mit der Zeichnung der näheren Erläuterung der Erfindung. Es zeigen:
- Figur 1:: eine schematische perspektivische Darstellung eines erfindungsgemäßen Luftfahrzeuges mit drei beispielhaft dargestellten Sensorvorrichtungen;
- Figur 2:: eine schematische Darstellung einer Sensorvorrichtung des Luftfahrzeugs aus Figur 1;
- Figur 3:: Komponenten einer integrierten Sende- und Detektionseinrichtung einer Sensorvorrichtung des Luftfahrzeugs aus Figur 1;
- Figur 4:: Komponenten einer weiteren integrierten Sende- und Detektionseinrichtung einer Sensorvorrichtung des Luftfahrzeugs aus Figur 1;
- Figur 5:: Komponenten einer Sendeeinrichtung und einer Detektionseinrichtung einer Sensorvorrichtung des Luftfahrzeugs aus Figur 1; und
- Figur 6:: eine perspektivische schematische Darstellung eines weiteren erfindungsgemäßen Luftfahrzeuges mit zwei Sensorvorrichtungen.

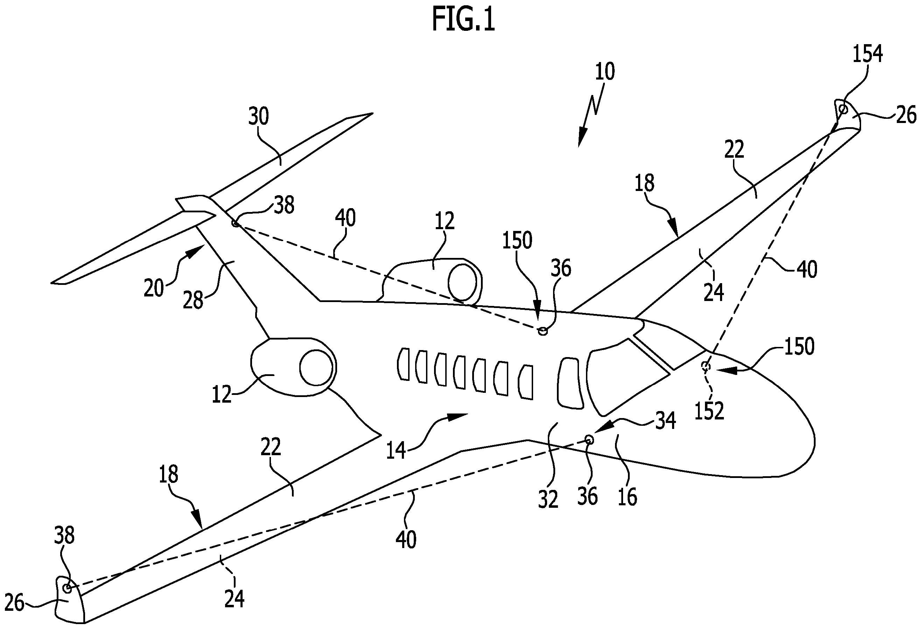

Figur 1 zeigt ein erfindungsgemäßes Luftfahrzeug 10, vorliegend ausgestaltet als Strahlflugzeug, zu dessen Antrieb Strahlturbinen 12 vorgesehen sind. Die vorliegende Erfindung kann jedoch auch mit Luftfahrzeugen andersartigen Antriebs zum Einsatz kommen, insbesondere Propellerantrieb oder Turbo-Prop-Antrieb. Möglich ist auch eine Umsetzung der Erfindung an antriebslosen Luftfahrzeugen, beispielsweise Ballonen. Andersartige aerostatisch betriebene erfindungsgemäße Luftfahrzeuge können Luftschiffe sein.

Das Luftfahrzeug 10 umfasst in an sich bekannter Weise einen Rumpf mit einem vorderen Rumpfbereich 16 sowie zwei Tragflügel 18 und ein Leitwerk 20. Die Tragflügel 18 weisen eine Oberseite 22 und eine Unterseite 24 auf. An den Flügelenden sind Flügelendkörper 26 positioniert, ausgestaltet als Winglets. Das Leitwerk 20 umfasst ein Seitenleitwerk 28 und ein Höhenleitwerk 30. Das Luftfahrzeug 10 weist eine Außenhaut 32 auf.

Das Luftfahrzeug 10 umfasst eine Sensorvorrichtung 34 mit einer Sendeeinrichtung 36 und einer Detektionseinrichtung 38. Die Sendeeinrichtung 36 ist am Rumpf 14 an dessen vorderen Rumpfbereich 16 angeordnet. Die Detektionseinrichtung 38 ist am Flügelendkörper 26 positioniert. Zwischen der Sendeeinrichtung 36 und der Detektionseinrichtung 38 ist eine Messstrecke 40 definiert. Die Sendeeinrichtung 36 und die Detektionseinrichtung 38 sind so am Luftfahrzeug 10 angeordnet, dass die Messstrecke 40 weitestgehend außerhalb einer an die Außenhaut 32 angrenzenden Strömungsschicht der Umgebungsatmosphäre des Luftfahrzeuges 10 verläuft. Die Messstrecke 40 ist dementsprechend weitestgehend außerhalb eines strömungsgestörten Bereiches der Umgebungsatmosphäre angeordnet. Die Sendeeinrichtung 36 und die Detektionseinrichtung 38 sind bevorzugt im Abstand zu Staupunkten am Luftfahrzeug 10 angeordnet.

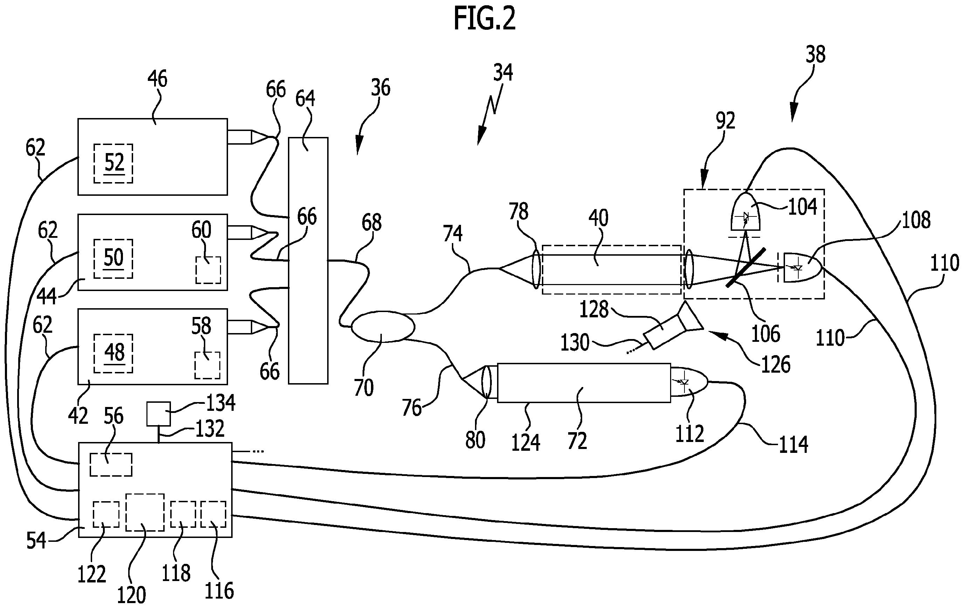

Weiter sind die Sendeeinrichtung 36 und die Detektionseinrichtung 38 in die Außenhaut 32 integriert. In den Figuren 1 und 2 nicht dargestellte Fenster der Sendeeinrichtung 36 und der Detektionseinrichtung 38 fügen sich im Wesentlichen spaltfrei in die Außenhaut 32 ein. Zur Vermeidung von Tau- oder Reifbildung an den Fenstern verfügt die Sensorvorrichtung 34 über eine nicht dargestellte Heizeinrichtung zum Beheizen der Fenster.

Figur 2 zeigt schematisch den beispielhaften Aufbau der Sensorvorrichtung 34. Die Sendeeinrichtung 36 umfasst vorliegend drei Lichtquellen 42, 44, 46, bei denen es sich insbesondere um Laserlichtquellen handelt. Die Lichtquellen 42 bis 46 umfassen Diodenlaser 48, 50 bzw. 52. Die Diodenlaser 48 bis 52 sind vorzugsweise schmalbandig und umfassen zum Beispiel DFB-Laser, DBR-Laser oder VCSELs.

Der Diodenlaser 48 ist vorliegend auf eine beispielhafte Wellenlänge von 763 Nanometer einstellbar, der Diodenlaser 50 auf eine beispielhafte Wellenlänge von 767 Nanometer und der Diodenlaser 52 auf eine beispielhafte Wellenlänge von 1400 Nanometer. Allerdings können die Lichtquellen 42, 44 moduliert und insbesondere wellenlängenmoduliert betrieben werden. Zu diesem Zweck weist die Sensorvorrichtung 34 eine schematisch dargestellte Steuereinrichtung 54 auf. Die Steuereinrichtung 54 umfasst einen Diodentreiber 56. Über den Diodentreiber 56 können die Diodenlaser 48, 50 beispielsweise im Kilohertz-Bereich wellenlängenmoduliert betrieben werden. Zusätzlich ist eine Ansteuerung von in den Lichtquellen 42, 44 angeordneten elektro-optischen Modulatoren (EOMs) 58, 60 möglich. Steuerleitungen 62 koppeln die Steuereinrichtung 54 mit den Lichtquellen 42 bis 46.

Die Sendeeinrichtung 36 umfasst ferner einen optischen Multiplexer 64. Dem Multiplexer 64 wird Strahlung der Lichtquellen 42 bis 46 zum Beispiel über Lichtleiter in Gestalt von Fasern 66 zugeführt. Über einen Lichtleiter, beispielsweise in Gestalt einer Faser 68, in den ein Strahlteiler 70 geschaltet ist, wird Strahlung vom Multiplexer 64 einerseits auf die Messstrecke 40 und andererseits auf eine Referenzmessstrecke 72 gekoppelt. Zu diesem Zweck kann ausgangsseitig des Strahlteilers 70 ein jeweiliger Lichtleiter, beispielsweise eine Faser 74, 76, angeschlossen sein. An die Fasern 74, 76 schließt sich eingangsseitig der Messstrecke 40 und der Referenzmessstrecke 72 beispielsweise eine optische Einheit 78 bzw. 80 an.

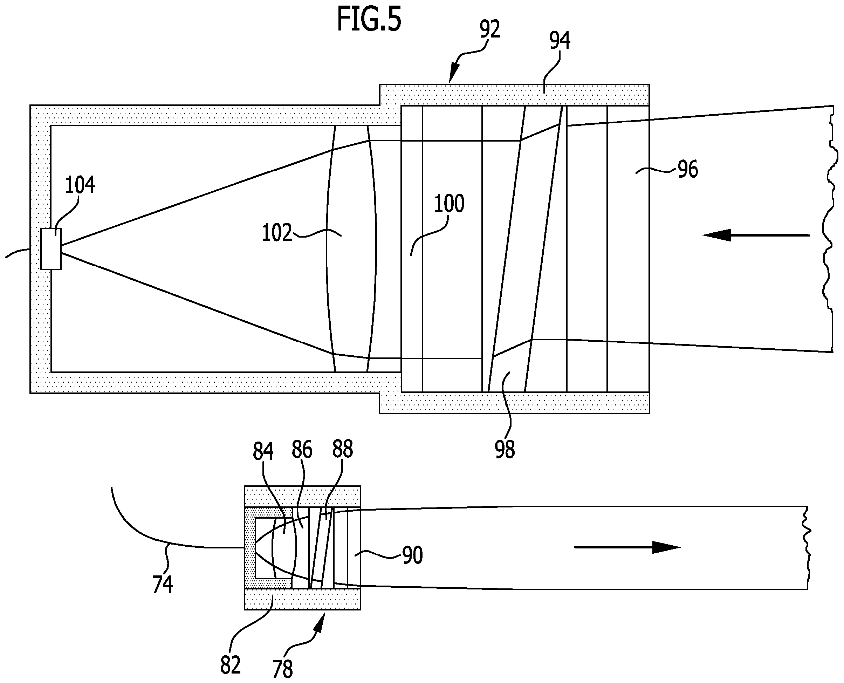

Figur 5 zeigt beispielhaft, wie die optische Einheit 78 beschaffen sein könnte, dies ist selbstverständlich auch auf die optische Einheit 80 anwendbar. Die optische Einheit 78 kann ein Gehäuse 82 aufweisen, in dem Strahlformungs-, Strahlumlenk-, Strahlfilter- und Strahlversatzelemente gefasst sein können. Beispielsweise sind vorliegend eine Linse 84 und dieser nachgeschaltet ein Filter 86, ein Prisma 88 sowie das in die Außenhaut 32 eingesetzte Fenster 90 in dem Gehäuse 82 gefasst.

Nach Durchlaufen der Messstrecke 40 wird die Strahlung über eine optische Einheit 92 der Detektionseinrichtung 38 aufgefangen. Die Figuren 2 und 5 zeigen beispielhaft und schematisch eine mögliche Bauform der optischen Einheit 92 mit einem Gehäuse 94. Eingangsseitig ist ein in die Außenhaut 32 integriertes Fenster 96 angeordnet, es können zum Beispiel ein Prisma 98 folgen und ein Filter 100. Über eine Linse 102 kann Strahlung auf einen Fotodetektor 104 fokussiert werden.

Die Figur 2 zeigt ferner, dass eine Trennung unterschiedlicher Strahlung durch die Messstrecke 40 mittels Strahlteilern, vorliegend einem dichroitischen Spiegel 106, getrennt werden kann. Strahlung unterschiedlicher Wellenlängen kann auf den Fotodetektor 104 oder einen weiteren beispielhaft dargestellten Fotodetektor 108 fokussiert werden. Auch eine mehrstufige Trennung von Strahlung unter Einsatz weiterer dichroitischer Spiegel und Fotodetektoren ist denkbar.

Die optische Einheit 92 bildet daher einen Demultiplexer.

Ausgangssignale der Detektionseinrichtung 38 können über an die Fotodetektoren 104, 108 angeschlossene Signalleitungen 110 der Steuereinrichtung 54 zugeführt werden, die zugleich auch eine Auswerteinrichtung bildet.

In vergleichbarer Weise kann am Ende der Referenzmessstrecke 72 ein Fotodetektor 112 positioniert sein. Über eine Signalleitung 114 kann ein Signal der Steuereinrichtung 54 zugeführt werden.

Zum Auswerten der Signale der Fotodetektoren 104, 108 und 112 sind Signalauswerteeinheiten und Signalauswertealgorithmen in der Steuereinrichtung 54 angeordnet. Beispielsweise kommt ein Signalverstärker 116 mit einem anschließenden Bandpass 118 zum Einsatz. An den Bandpass 118 kann sich ein Lock-in-Verstärker 120 anschließen. Der Lock-in-Verstärker 120 kann ein zum Ansteuern der Lichtquellen 42, 44, 46 korrespondierendes Referenzsignal empfangen und aus den Messsignalen der Fotodetektoren 104, 108 und 112 Hintergrund- und Rauschanteile filtern. An den Lock-in-Verstärker 120 kann sich beispielsweise ein Tiefpass 122 anschließen.

Die Referenzmessstrecke 72 ist vorzugsweise innen im Luftfahrzeug 10 positioniert. Sie weist ein Gehäuse 124 auf, in dem ein Gas oder Gasgemisch definierter Zusammensetzung, Temperatur und definierten Druckes aufgenommen ist.

Die Sensorvorrichtung 34 weist ferner eine Erfassungseinrichtung 126 auf, die vorliegend beispielsweise eine digitale Kamera 128 umfasst. Mittels der Kamera 128 kann optisch erfasst werden, ob Strahlung, die über die Messstrecke 40 verläuft, positionsgenau auf die Detektionseinrichtung 38 ausgerichtet ist. Über eine Signalleitung 130 kann ein diesbezügliches Signal der Steuereinrichtung 54 bereitgestellt werden.

Die Steuereinrichtung 54 ist über eine Steuerleitung 132 mit einer Stelleinrichtung 134 gekoppelt. Die Stelleinrichtung 134 ist vorliegend schematisch außerhalb der Steuereinrichtung 54 gezeigt. Jedoch kann die Stelleinrichtung 134 ganz oder teilweise in eine der Lichtquellen 42, 44, 46, in den Multiplexer 64 oder die optischen Einheiten 78 oder 92 integriert sein. Wesentlich ist, dass mit der Stelleinrichtung 134 eine Nachführung der Strahlung derart möglich ist, dass die durch die Messstrecke 40 laufende Strahlung positionsgenau auf die Detektionseinrichtung 38 ausgerichtet ist.

Möglich ist auch der Einsatz von Fotodetektoren 104, 108 mit mehreren Detektorbereichen, beispielsweise können Vier-Quadranten-Detektoren zum Einsatz kommen, um die korrekte Ausrichtung der Strahlung auf die Detektionseinrichtung 38 festzustellen.

Mit der Sensorvorrichtung 34 können die Werte flugrelevanter Kenngrößen der Umgebungsatmosphäre des Luftfahrzeugs 10 ermittelt werden. Die Messung erfolgt durch Absorption von Strahlung in der Messstrecke 40, so dass die Sensorvorrichtung 34 eine Absorptionsmessvorrichtung ist. Dies gibt die Möglichkeit, Lichtquellen 42, 44, 46 von geringer, augensicherer Intensität einzusetzen, so dass die Gefahr einer Gefährdung von Personen durch Laserstrahlung vermieden werden kann.

Insbesondere ist es möglich, mehrere Kenngrößen simultan und unter Ausnutzung derselben Lichtquelle und desselben Gases der Umgebungsatmosphäre zu bestimmen.

Zur Bestimmung der Temperatur können die Lichtquellen 42, 44 eingesetzt werden. Es kann eine jeweilige Intensität eines energetischen Überganges in Sauerstoff der Umgebungsatmosphäre gemessen werden. Die Steuereinrichtung 54 kann das Intensitätsverhältnis, jeweils gemessen gegen den Hintergrund, ermitteln. Aus der Temperaturabhängigkeit des Intensitätsverhältnisses ist es der Steuereinrichtung 54 möglich, die Temperatur in der Umgebungsatmosphäre zu bestimmen.

Ferner ist es möglich, mittels der Strahlung der Lichtquelle 46 die Feuchte in der Umgebungsatmosphäre zu bestimmen, d.h. den Gehalt an Wasserdampf. Dabei kann die Intensität eines energetischen Überganges, gemessen gegen den Hintergrund, bestimmt werden. Über die Breite der Linie des Überganges, vorliegend bei 1400 Nanometern, wird die Linienstärke durch Integration gebildet. Die Linienstärke ist ein Maß für den Wasserdampfgehalt der Umgebungsatmosphäre.

Darüber hinaus besteht die Möglichkeit, den Druck in der Umgebungsatmosphäre zu bestimmen. Vorliegend kann eine Partialdruckmessung insbesondere an Sauerstoff beispielsweise unter Einsatz der Lichtquellen 42 und/oder 44 durchgeführt werden.

Zur Druckbestimmung können der Diodentreiber 56 und der elektrooptische Modulator 58 beispielsweise derart angesteuert werden, dass die Strahlung der Lichtquelle 42 auf zweierlei unterschiedliche Weisen moduliert wird. Es kann zum Beispiel eine wellenlängenabhängige Modulation im Kilohertzbereich zum Einsatz kommen, um die druckabhängige Intensität eines Übergangs des Gases in der Messstrecke 40 mit einem jeweiligen Modulationsverfahren zu bestimmen. Durch Verhältnisbildung der Intensitäten beider Modulationsverfahren können das Intensitätsrauschen reduziert und das Signal-zu-RauschVerhältnis verbessert werden. In die Bestimmung der Linienform des spektroskopierten Übergangs, um die Intensität über die Linie zu bilden, kann die zuvor ermittelte Temperatur als Fitparameter eingehen.

Die Sensorvorrichtung 34 ist so ausgestaltet, dass beispielsweise eine f/2f-Modulation und/oder eine two-tone-Modulation zum Einsatz kommen kann.

Die Referenzmessstrecke 72 mit dem Gas oder Gasgemisch bekannten Zustandes kann als Wellenlängenreferenz zur korrekten Bestimmung der Wellenlängen der Lichtquellen 42 bis 46 verwendet werden. Insbesondere ist jedoch aufgrund des bekannten Druckes und der bekannten Temperatur des Gases oder Gasgemisches eine Breitenreferenz für die Übergänge ermittelbar, die in der Messstrecke 40 spektroskopiert werden. Unter Berücksichtigung des Signals, das am Fotodetektor 112 anhand der die Referenzmessstrecke 72 durchlaufenden Strahlung bereitgestellt werden kann, ist der Steuereinrichtung 54 dadurch eine genauere Bestimmung der flugrelevanten Kenngrößen möglich.

Des Weiteren besteht die Möglichkeit, unter Berücksichtigung der Strahlung zweier Lichtquellen 42 bis 46 die Extinktion in der Messstrecke 40 aufgrund von grobpartikeligen Steuern zu ermitteln. Auf diese Weise lässt sich der Aerosolgehalt der Umgebungsatmosphäre bestimmen.

Außerdem erlaubt es die Sensorvorrichtung 34, eine Relativgeschwindigkeit des Luftfahrzeuges 10 zur Umgebungsatmosphäre zu berechnen. Eine geschwindigkeitsabhängige Verschiebung eines Überganges (spektroskopierte Linie) von Gas in der Messstrecke 40 kann durch Vergleich mit einem unverschobenen Übergang (Linie) eines Gases in der Referenzmessstrecke 72 berechnet werden. Aus der Dopplerverschiebung kann die Relativgeschwindigkeit berechnet werden. Fällt dieses unter einen Mindestwert, kann ein entsprechender Warnhinweis dem Luftfahrzeugführer bereitgestellt werden, nämlich dass sich die Geschwindigkeit des Luftfahrzeugs 10 der Überziehgeschwindigkeit nähert.

Selbstverständlich ist es möglich, dass die Positionen der Sendeeinrichtung 36 und der Detektionseinrichtung 38 am Luftfahrzeug 10 vertauscht sind. Dies gilt auch für die nachfolgend noch erwähnten Sensorvorrichtungen. Für gleiche oder gleichwirkende Merkmale und Bauteile der nachfolgend erwähnten Sensorvorrichtungen kommen identische Bezugszeichen zum Einsatz. Es wird nur auf die wesentlichen Unterschiede zur Sensorvorrichtung 34 eingegangen.

Figur 1 zeigt schematisch ein Beispiel einer weiteren Sensorvorrichtung 140. Bei der Sensorvorrichtung 140 ist die Sendeeinrichtung 36 beispielsweise an einer Oberseite des Rumpfes 14 positioniert. Die Detektionseinrichtung 38 ist am Leitwerk 20 positioniert, vorzugsweise an der Seitenflosse des Seitenleitwerks 28.

Figur 1 zeigt ferner eine weitere Sensorvorrichtung 150, bei der eine kombinierte Sende- und Detektionseinrichtung 152 sowie zusätzlich eine Reflexionseinrichtung 154 vorgesehen sind. Unter Einsatz der Reflexionseinrichtung 154 lässt sich die Messstrecke 40 auf konstruktiv einfache Weise verlängern, bei Verwendung eines Retroreflektors verdoppeln. Durch die zusätzliche Absorptionsmessstrecke können die flugrelevanten Kenngrößen noch genauer bestimmt werden.

Beispielsweise ist die kombinierte Sende- und Detektionseinrichtung 152 am vorderen Rumpfbereich 16 (wie die Sendeeinrichtung 36) angeordnet und die Reflexionseinrichtung 154 am Flügelendkörper 26 (wie die Detektionseinrichtung 38).

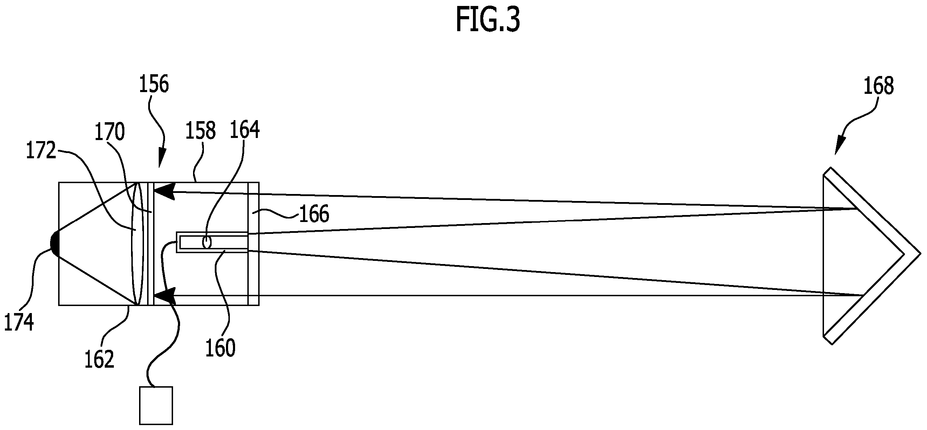

Die Figur 3 zeigt beispielhaft eine optische Einheit 156, die bei der kombinierten Sende- und Detektionseinrichtung 152 zum Einsatz kommen kann, sowie die Reflexionseinrichtung 154.

Die optische Einheit 156 umfasst zum Beispiel ein Gehäuse 158, das eine Sendeeinheit 160 und eine Empfangseinheit 162 aufnimmt. Die Sendeeinheit 160 weist eine Linse 164 zum Auskoppeln der Strahlung aus der Faser 74 auf. Die Strahlung wird durch das Fenster 166 durch die Messstrecke 40 geführt, trifft auf die als Retroreflektor ausgestaltete Reflexionseinrichtung 168 und verläuft abermals durch die Messstrecke 40. Nach Passieren des Fensters 160 ist ein Filter 170 vorgesehen, an den sich eine Linse 172 anschließt, um die Strahlung auf einen Fotodetektor 174 zu fokussieren. Der Fotodetektor 174 kann in Funktion und Aufbau dem/den Fotodetektor(en) 104, 108 entsprechen.

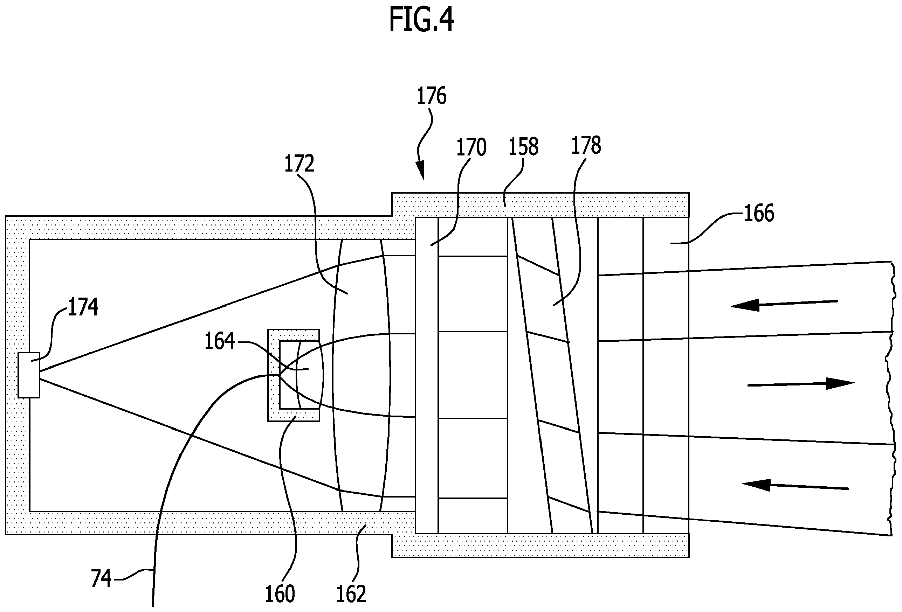

Die Figur 4 zeigt eine weitere optische Einheit 176, die in Funktion der optischen Einheit 156 entspricht und sich im Wesentlichen als Kombination der optischen Einheiten 78 und 92 ergibt. Im Gegensatz zur optischen Einheit 156 sind der Filter 170 und die Linse 172 ausgangsseitig der Linse 164 positioniert. Überdies kann ein Prisma 178 vorgesehen sein.

Selbstverständlich ist es denkbar, dass anstelle eines Retroreflektors 168 ein andersartiger Reflektor zum Einsatz kommen kann. Denkbar ist der Einsatz eines Spiegels, zum Beispiel wenn die Sendeeinrichtung und die Detektionseinrichtung an unterschiedlichen Positionen am Luftfahrzeug 10 angeordnet sind.

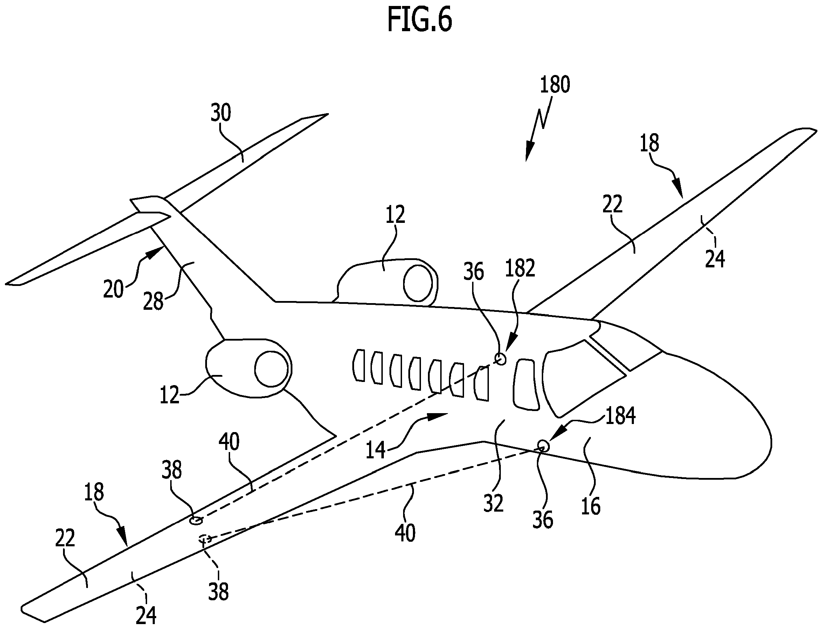

Figur 6 zeigt eine mit dem Bezugszeichen 180 belegte vorteilhafte Ausführungsform eines erfindungsgemäßen Luftfahrzeugs. Beim Luftfahrzeug 180 kommen zwei Sensorvorrichtungen 182, 184 zum Einsatz, die beispielsweise jeweils wie die Sensorvorrichtung 34 ausgestaltet sind.

Der Unterschied zu dieser besteht allerdings darin, dass an der Oberseite 22 und der Unterseite 24 eines Tragflügels 18 jeweils eine Detektionseinrichtung 38 angeordnet ist. Die zugehörigen Sendeeinrichtungen 36 sind seitlich am Rumpf 14 positioniert.

Beim Luftfahrzeug 180 ist dadurch die Möglichkeit gegeben, den Druck der Umgebungsatmosphäre oberhalb und unterhalb des Tragflügels 18 zu bestimmen. Durch die Bestimmung der Druckdifferenz kann ein Maß für den am Tragflügel 18 anliegenden Auftrieb festgestellt werden. Unterschreitet der Differenzdruck einen Schwellenwertdifferenzdruck, kann dem Luftfahrzeugführer ein Hinweis bereitgestellt werden, dass der Auftrieb zu gering ist.

### Bezugszeichen

- 10: Luftfahrzeug
- 12: Strahlturbine
- 14: Rumpf
- 16: Rumpfbereich
- 18: Tragflügel
- 20: Leitwerk
- 22: Oberseite
- 24: Unterseite
- 26: Flügelendkörper
- 28: Seitenleitwerk
- 30: Höhenleitwerk
- 32: Außenhaut
- 34: Sensorvorrichtung
- 36: Sendeeinrichtung
- 38: Detektionseinrichtung
- 40: Messstrecke
- 42: Lichtquelle
- 44: Lichtquelle
- 46: Lichtquelle
- 48: Diodenlaser
- 50: Diodenlaser
- 52: Diodenlaser
- 54: Steuereinrichtung
- 56: Diodentreiber
- 58: EOM
- 60: EOM
- 62: Steuerleitung
- 64: Multiplexer
- 66: Faser
- 68: Faser
- 70: Strahlteiler
- 72: Referenzmessstrecke
- 74: Faser
- 76: Faser
- 78: optische Einheit
- 80: optische Einheit
- 82: Gehäuse
- 84: Linse
- 86: Filter
- 88: Prisma
- 90: Fenster
- 92: optische Einheit
- 94: Gehäuse
- 96: Fenster
- 98: Prisma
- 100: Filter
- 102: Linse
- 104: Fotodetektor
- 106: dichroitischer Spiegel
- 108: Fotodetektor
- 110: Signalleitung
- 112: Fotodetektor
- 114: Signalleitung
- 116: Signalverstärker
- 118: Bandpass
- 120: Lock-in-Verstärker
- 122: Tiefpass
- 124: Gehäuse
- 126: Erfassungseinrichtung
- 128: Kamera
- 130: Signalleitung
- 132: Steuerleitung
- 134: Stelleinrichtung
- 140: Sensorvorrichtung
- 150: Sensorvorrichtung
- 152: Sende- und Detektionseinrichtung
- 154: Reflexionseinrichtung
- 156: optische Einheit
- 158: Gehäuse
- 160: Sendeeinheit
- 162: Empfangseinheit
- 164: Linse
- 166: Fenster
- 168: Retroreflektor
- 170: Filter
- 172: Linse
- 174: Fotodetektor
- 176: optische Einheit
- 178: Prisma
- 180: Luftfahrzeug
- 182: Sensorvorrichtung
- 184: Sensorvorrichtung

## Patentansprüche

1. Luftfahrzeug, das eine optische spektroskopische Sensorvorrichtung (34; 140; 150; 182, 184) zur Ermittlung von flugrelevanten Kenngrößen einer Umgebungsatmosphäre des Luftfahrzeuges (10; 180) umfasst, insbesondere der Temperatur, des Drucks und/oder der Feuchte, mit einer Sendeeinrichtung (36; 152) und einer Detektionseinrichtung (38; 152), wobei die Sensorvorrichtung (34; 140; 150; 182, 184) als Absorptionsmessvorrichtung ausgestaltet ist und eine außerhalb einer Außenhaut (32) des Luftfahrzeuges (10; 180) anordenbare Messstrecke (40) zwischen der Sendeeinrichtung (36) und der Detektionseinrichtung (38) umfasst oder definiert, wobei die Sensorvorrichtung (34; 140; 150; 182, 184) eingerichtet ist, eine Relativgeschwindigkeit des Luftfahrzeugs (10; 180) zur Umgebungsatmosphäre festzustellen, wobei eine Doppler-Verschiebung zumindest eines Übergangs eines in der Umgebungsatmosphäre enthaltenen Gases ermittelt wird, **dadurch gekennzeichnet, dass** die Sensorvorrichtung (34; 140; 150; 182, 184) eine Referenzmessstrecke (72) umfasst mit einem Gehäuse (124) und darin enthaltenem Gas oder Gasgemisch, wobei die Referenzmessstrecke (72) so eingerichtet ist, dass ein Teil an von der Sendeeinrichtung (36; 152) an die Detektionseinrichtung (38; 152) ausgesandter Strahlung durch die Referenzmessstrecke (72) geführt ist, und wobei das Gas oder Gasgemisch der Referenzmessstrecke (72) als nicht-dopplerverschobene Referenz von Übergängen im Gas oder Gasgemisch dient.

2. Luftfahrzeug nach Anspruch 1, **dadurch gekennzeichnet, dass** die Sensorvorrichtung (34; 140; 150; 182, 184) derart am Luftfahrzeug positioniert ist, dass die Messstrecke (40) außerhalb oder im Wesentlichen außerhalb einer an die Außenhaut (32) grenzenden Strömungsschicht verläuft und/oder dass die Sensorvorrichtung (150) eine Reflexionseinrichtung (154) umfasst, die in die Messstrecke (40) integriert ist zur Reflexion von Strahlung der Sendeeinrichtung (152) in Richtung auf die Detektionseinrichtung (152).

3. Luftfahrzeug nach Anspruch 2, **dadurch gekennzeichnet, dass** die Sendeeinrichtung (152) und die Detektionseinrichtung (152) in ein gemeinsames Gehäuse integriert sind und/oder dass die Sendeeinrichtung die Detektionseinrichtung umfasst oder ausbildet.

4. Luftfahrzeug nach einem der voranstehenden Ansprüche, **dadurch gekennzeichnet, dass** die Sendeeinrichtung (36; 152) und/oder die Detektionseinrichtung (38; 152) und/oder die Reflexionseinrichtung (154) folgendermaßen am Luftfahrzeug positioniert sind:
- am Rumpf (14) , insbesondere an einem vorderen Rumpfbereich (16) und/oder an einer Oberseite des Rumpfes (14);
- an einem Tragflügel (18), beispielsweise dessen Oberseite (22) oder Unterseite (24), vorzugsweise an einem Flügelendkörper (26);
- an einem Leitwerk (20), insbesondere einer Seitenflosse oder Höhenflosse.

5. Luftfahrzeug nach einem der voranstehenden Ansprüche, **dadurch gekennzeichnet, dass** zumindest eines der Folgenden gilt:
- die Sendeeinrichtung (36; 152) und/oder die Detektionseinrichtung (38; 152) sind in die Außenhaut (32) integriert;
- die Sensorvorrichtung (34; 140; 150; 182, 184) umfasst mindestens eine Heizeinrichtung zum Beheizen der Sendeeinrichtung (36; 152) und/oder der Detektionseinrichtung (38; 152).

6. Luftfahrzeug nach einem der voranstehenden Ansprüche, **dadurch gekennzeichnet, dass** mit der Sensorvorrichtung (34; 140; 150; 182, 184) feststellbar ist, ob Strahlung der Sendeeinrichtung (36; 152) positionsgenau auf die Detektionseinrichtung (38; 152) ausgerichtet ist, und dass die Sensorvorrichtung (34; 140; 150; 182, 184) eine Stelleinrichtung (134) aufweist, die mit der Sendeeinrichtung (36; 152) und/oder der Detektionseinrichtung (38; 152) zum Nachführen der Strahlung in Richtung auf die Detektionseinrichtung (38; 152) gekoppelt ist, wobei vorzugsweise ein Leuchtfleck der von der Sendeeinrichtung (36; 152) auf die Detektionseinrichtung (38; 152) gerichteten Strahlung mit einer Kamera (128) erfassbar ist, und/oder wobei die Detektionseinrichtung (38; 152) vorzugsweise einen Detektor mit einer Mehrzahl von Detektionsbereichen aufweist, beispielsweise einen Vier-Quadranten-Detektor.

7. Luftfahrzeug nach einem der voranstehenden Ansprüche, **dadurch gekennzeichnet, dass** die Sendeeinrichtung (36; 152) zumindest eine Laserlichtquelle (42, 44, 46) aufweist, vorzugsweise dass zwei oder mehr Kenngrößen anhand der Strahlung derselben Laserlichtquelle (42, 44, 46) bestimmbar sind, und/oder dass zumindest zwei Kenngrößen simultan bestimmbar sind.

8. Luftfahrzeug nach einem der voranstehenden Ansprüche, **dadurch gekennzeichnet, dass** die Sendeeinrichtung (36; 152) einen optischen Multiplexer (64) aufweist, über den die Strahlung mehr als einer Lichtquelle (42, 44, 46) der Sendeeinrichtung (36; 152) in die Messstrecke (40) einkoppelbar ist, und dass die Detektionseinrichtung (38; 152) einen optischen Demultiplexer aufweist, über den die Strahlung unterschiedlicher Lichtquellen (42, 44, 46) voneinander separierbar ist.

9. Luftfahrzeug nach einem der voranstehenden Ansprüche, **dadurch gekennzeichnet, dass** mittels der Sensorvorrichtung (34; 140; 150; 182, 184) zumindest eines der Folgenden bestimmbar ist:
- mindestens eine Kenngröße an gasförmigem Sauerstoff, Kohlendioxid, Methan und/oder Wasser;
- die Temperatur, der Druck, die Feuchte und/oder ein Aerosolgehalt in der Luft;
- die Temperatur der Umgebungsatmosphäre, wobei das Verhältnis der Intensitäten zumindest zweier energetischer Übergänge in einem Gas der Umgebungsatmosphäre ermittelt wird;
- die Feuchte der Umgebungsatmosphäre, wobei die Intensität zumindest eines energetischen Überganges in der Umgebungsatmosphäre enthaltenen Wasserdampfes ermittelt wird;
- der Druck der Umgebungsatmosphäre, wobei die Intensität zumindest eines energetischen Überganges in der Umgebungsatmosphäre enthaltenen Gases ermittelt wird, insbesondere dass eine jeweilige Intensität des Überganges mittels Strahlung in zumindest zweierlei modulierter Weise ermittelbar ist, und dass das Verhältnis beider Intensitäten ermittelt wird.

10. Luftfahrzeug nach Anspruch 9, **dadurch gekennzeichnet, dass** die Sensorvorrichtung so ausgebildet ist, dass eine f/2f-Modulationspektroskopie oder eine two-tone-Modulationsspektroskopie durchführbar ist.

11. Luftfahrzeug nach Anspruch 9 oder 10, umfassend einen Tragflügel, **dadurch gekennzeichnet, dass** der Druck oberhalb und unterhalb des Tragflügels (18) bestimmbar und daraus der Differenzdruck feststellbar ist, und dass bei Unterschreiten eines Schwellenwertdifferenzdrucks ein Hinweis betreffend einen zu geringen Auftrieb ausgebbar ist.

12. Luftfahrzeug nach einem der voranstehenden Ansprüche, **dadurch gekennzeichnet, dass** ein Hinweis ausgebbar ist, wenn sich die Relativgeschwindigkeit von einer Überziehgeschwindigkeit des Luftfahrzeugs um weniger als eine Mindestgeschwindigkeitsdifferenz unterscheidet.

13. Luftfahrzeug nach einem der voranstehenden Ansprüche, **dadurch gekennzeichnet, dass** zum Bestimmen des Aerosolgehaltes die Extinktion der Strahlung von zumindest zwei Lichtquellen (42, 44, 46) der Sendeeinrichtung (36; 152) ermittelbar ist und/oder dass die Sensorvorrichtung (34; 140; 150; 182, 184) so ausgebildet ist, dass die Bestimmung der Temperatur und des Druckes der Umgebungsatmosphäre mit derselben Lichtquelle (42, 44, 46) der Sendeeinrichtung (36; 152) an demselben Gas durchführbar ist.

14. Luftfahrzeug nach einem der voranstehenden Ansprüche, **dadurch gekennzeichnet, dass** die Referenzmessstrecke (72) im Luftfahrzeug (10; 180) angeordnet ist.

15. Verfahren zur Ermittlung von flugrelevanten Kenngrößen einer Umgebungsatmosphäre eines Luftfahrzeugs, insbesondere der Temperatur, des Druckes und/oder der Feuchte, unter Verwendung einer optischen spektroskopischen Sensorvorrichtung mit einer Sendeeinrichtung und einer Detektionseinrichtung, bei welchem Verfahren eine als Absorptionsmessvorrichtung ausgestaltete Sensorvorrichtung verwendet wird und Strahlung von der Sendeeinrichtung zur Detektionseinrichtung über eine außerhalb einer Außenhaut des Luftfahrzeuges angeordnete Messstrecke verläuft, wobei mit der Sensorvorrichtung (34; 140; 150; 182, 184) eine Relativgeschwindigkeit des Luftfahrzeugs (10; 180) zur Umgebungsatmosphäre festgestellt wird, und wobei eine Doppler-Verschiebung zumindest eines Übergangs eines in der Umgebungsatmosphäre enthaltenen Gases ermittelt wird, **dadurch gekennzeichnet, dass** die Sensorvorrichtung (34; 140; 150; 182, 184) eine Referenzmessstrecke (72) umfasst mit einem Gehäuse (124) und darin enthaltenem Gas oder Gasgemisch, wobei ein Teil an von der Sendeeinrichtung (36; 152) an die Detektionseinrichtung (38; 152) ausgesandter Strahlung durch die Referenzmessstrecke (72) geführt wird, und wobei das Gas oder Gasgemisch der Referenzmessstrecke (72) als nicht-dopplerverschobene Referenz von Übergängen im Gas oder Gasgemisch dient.

## Claims

1. Aircraft comprising an optical spectroscopic sensor apparatus (34; 140; 150; 182, 184) for ascertaining flight-relevant characteristic variables of an ambient atmosphere of the aircraft (10; 180), in particular the temperature, the pressure and/or the humidity, comprising a transmitting device (36; 152), and a detection device (38; 152), the sensor apparatus (34; 140; 150; 182, 184) being designed as an absorption measuring apparatus and comprising or defining a measuring section (40) between the transmitting device (36) and the detection device (38), which section is configured to be arranged outside an outer skin (32) of the aircraft (10; 180), the sensor apparatus (34; 140; 150; 182, 184) being configured to identify a relative speed of the aircraft (10; 180) with respect to the ambient atmosphere, with a Doppler shift of at least one transition of a gas contained in the ambient atmosphere being ascertained, **characterized in that** the sensor apparatus (34; 140; 150; 182, 184) comprises a reference measurement section (72) having a housing (124) and a gas or gas mixture contained therein, the reference measurement section (72) being configured such that some radiation emitted by the transmitting device (36; 152) to the detection device (38; 152) is guided through the reference measurement section (72), and the gas or gas mixture of the reference measurement section (72) being used as a non-Doppler-shifted reference of transitions in the gas or gas mixture.

2. Aircraft in accordance with claim 1, **characterized in that** the sensor apparatus (34; 140; 150; 182, 184) is positioned on the aircraft in such a way that the measuring section (40) extends outside of or substantially outside of a flow layer adjacent to the outer skin (32) and/or **in that** the sensor apparatus (150) comprises a reflection device (154), which is integrated into the measuring section (40), for reflecting radiation from the transmitting device (152) in the direction of the detection device (152).

3. Aircraft in accordance with claim 2, **characterized in that** the transmitting device (152) and the detection device (152) are integrated into a common housing and/or **in that** the transmitting device comprises or forms the detection device.

4. Aircraft in accordance with any of the preceding claims, **characterized in that** the transmitting device (36; 152) and/or the detection device (38; 152) and/or the reflection device (154) are positioned on the aircraft as follows:
- on the fuselage (14), in particular on a front fuselage region (16) and/or on an upper face of the fuselage (14);
- on a wing (18), for example its upper face (22) or lower face (24), preferably on a wing end body (26);
- on a tail assembly (20), in particular a tail fin or a stabilizer.

5. Aircraft in accordance with any of the preceding claims, **characterized in that** at least one of the following applies:
- the transmitting device (36; 152) and/or the detection device (38; 152) are integrated into the outer skin (32);
- the sensor apparatus (34; 140; 150; 182, 184) comprises at least one heating device for heating the transmitting device (36; 152) and/or the detection device (38; 152).

6. Aircraft in accordance with any of the preceding claims, **characterized in that** the sensor apparatus (34; 140; 150; 182, 184) is configured to be used to identify whether radiation of the transmitting device (36; 152) is aligned precisely with the detection device (38; 152), and **in that** the sensor apparatus (34; 140; 150; 182, 184) has a setting device (134) which is coupled to the transmitting device (36; 152) and/or the detection device (38; 152) for tracking the radiation in the direction of the detection device (38; 152), preferably a light spot of the radiation directed by the transmitting device (36; 152) onto the detection device (38; 152) being detectable with a camera (128), and/or the detection device (38; 152) preferably having a detector comprising a plurality of detection regions, for example a four-quadrant detector.

7. Aircraft in accordance with any of the preceding claims, **characterized in that** the transmitting device (36; 152) has at least one laser light source (42, 44, 46), preferably **in that** two or more characteristic variables are determinable using the radiation of the same laser light source (42, 44, 46), and/or **in that** at least two characteristic variables are determinable simultaneously.

8. Aircraft in accordance with any of the preceding claims, **characterized in that** the transmitting device (36; 152) has an optical multiplexer (64) via which the radiation of more than one light source (42, 44, 46) of the transmitting device (36; 152) is couplable into the measuring section (40), and **in that** the detection device (38; 152) has an optical demultiplexer via which the radiation of different light sources (42, 44, 46) is separable from one another.

9. Aircraft in accordance with any of the preceding claims, **characterized in that** at least one of the following is determinable by means of the sensor apparatus (34; 140; 150; 182, 184):
- at least one characteristic variable of gaseous oxygen, carbon dioxide, methane, and/or water;
- the temperature, the pressure, the humidity, and/or an aerosol content in the air;
- the temperature of the ambient atmosphere, the ratio of the intensities of at least two energetic transitions in a gas of the ambient atmosphere being ascertained;
- the humidity of the ambient atmosphere, the intensity of at least one energetic transition in the steam contained in the ambient atmosphere being ascertained;
- the pressure of the ambient atmosphere, the intensity of at least one energetic transition in the gas contained in the ambient atmosphere being ascertained, in particular **in that** a relevant intensity of the transition by means of radiation is ascertainable in at least a twofold modulated way, and **in that** the ratio of both intensities is ascertained.

10. Aircraft in accordance with claim 9, **characterized in that** the sensor apparatus is designed such that f/2f modulation spectroscopy or a two-tone modulation spectroscopy is configured to be carried out.

11. Aircraft in accordance with either claim 9 or claim 10, comprising a wing, **characterized in that** the pressure above and below the wing (18) is determinable and the differential pressure is identifiable therefrom, and **in that** if the pressure falls below a threshold differential pressure, an indication relating to an excessively low lift is configured to be output.

12. Aircraft in accordance with any of the preceding claims, **characterized in that** an indication is configured to be output if the relative speed differs from a stall speed of the aircraft by less than a minimum speed difference.

13. Aircraft in accordance with any of the preceding claims, **characterized in that** in order to determine the aerosol content, the extinction of the radiation from at least two light sources (42, 44, 46) of the transmitting device (36; 152) is ascertainable,
and/or **in that** the sensor apparatus (34; 140; 150; 182, 184) is designed such that the temperature and the pressure of the ambient atmosphere is determinable with the same light source (42, 44, 46) of the transmitting device (36; 152) on the same gas.

14. Aircraft in accordance with any of the preceding claims, **characterized in that** the reference measurement section (72) is arranged in the aircraft (10; 180).

15. Method for ascertaining flight-relevant characteristic variables of an ambient atmosphere of an aircraft, in particular the temperature, the pressure and/or the humidity, using an optical spectroscopic sensor apparatus having a transmitting device and a detection device, in which method a sensor apparatus designed as an absorption measuring apparatus is used, and radiation from the transmitting device to the detection device extends over a measuring section arranged outside an outer skin of the aircraft, a relative speed of the aircraft (10; 180) with respect to the ambient atmosphere being identifiable using the sensor apparatus (34; 140; 150; 182, 184), and a Doppler shift of at least one transition of a gas contained in the ambient atmosphere being ascertained, **characterized in that** the sensor apparatus (34; 140; 150; 182, 184) comprises a reference measurement section (72) having a housing (124) and a gas or gas mixture contained therein, some of the radiation emitted by the transmitting device (36; 152) to the detection device (38; 152) being guided through the reference measurement section (72), and the gas or gas mixture of the reference measurement section (72) being used as a non-Doppler-shifted reference of transitions in the gas or gas mixture.

## Revendications

1. Aéronef comportant un dispositif capteur optique spectroscopique (34 ; 140 ; 150 ; 182, 184) dévolu à la spécification de grandeurs caractéristiques d'une atmosphère environnante dudit aéronef (10 ; 180) qui sont pertinentes pour l'exécution d'un vol, en particulier de la température, de la pression et/ou de l'humidité, comprenant un appareil émetteur (36 ; 152) et un appareil détecteur (38 ; 152), ledit dispositif capteur (34 ; 140 ; 150 ; 182, 184) étant conçu comme un dispositif mesureur d'absorption et incluant ou définissant, entre ledit appareil émetteur (36) et ledit appareil détecteur (38), un trajet de mesure (40) situé à l'extérieur d'une coque (32) dudit aéronef (10 ; 180), dans lequel le dispositif capteur (34 ; 140 ; 150 ; 182, 184) est configuré de constater une vitesse relative dudit aéronef (10 ; 180) par rapport à l'atmosphère environnante, avec spécification du déphasage Doppler d'au moins un transfert d'un gaz renfermé par ladite atmosphère environnante, **caractérisé par le fait que** le dispositif capteur (34 ; 140 ; 150 ; 182, 184) inclut un trajet de mesure de référence (72), présentant un boîtier (124) et un gaz ou un mélange gazeux renfermé par ce dernier, le trajet de mesure de référence (72) étant configuré pour qu'une partie d'un rayonnement émis par l'appareil émetteur (36 ; 152), à l'adresse de l'appareil détecteur (38 ; 152), est guidée par ledit trajet de mesure de référence (72), et dans lequel ledit gaz ou mélange gazeux du trajet de mesure de référence (72) sert de critère exempt de déphasage Doppler de transferts dans ledit gaz ou mélange gazeux.

2. Aéronef selon la revendication 1, **caractérisé par le fait que** le dispositif capteur (34 ; 140 ; 150 ; 182, 184) occupe, sur ledit aéronef, un emplacement tel que le trajet de mesure (40) s'étende à l'extérieur, ou pour l'essentiel à l'extérieur d'une couche d'écoulement limitrophe de la coque (32), et/ou le dispositif capteur (150) inclut un appareil de réflexion (154) intégré dans le trajet de mesure (40) en vue de la réflexion, en direction de l'appareil détecteur (152), d'un rayonnement de l'appareil émetteur (152).

3. Aéronef selon la revendication 2, **caractérisé par le fait que** l'appareil émetteur (152) et l'appareil détecteur (152) sont intégrés dans un boîtier commun et/ou l'appareil émetteur (152) inclut ou constitue l'appareil détecteur (152).

4. Aéronef selon l'une des revendications précédentes, **caractérisé par le fait que** l'appareil émetteur (36 ; 152) et/ou l'appareil détecteur (38 ; 152) et/ou l'appareil de réflexion (154) occupe(nt), sur ledit aéronef, les emplacements suivants:
- sur le fuselage (14), en particulier dans une région antérieure (16) dudit fuselage et/ou sur une face supérieure dudit fuselage (14);
- sur une aile portante (18), par exemple à la face supérieure (22) ou à la face inférieure (24) de cette dernière, de préférence sur un corps (26) de bout d'aile;
- sur un empennage (20), en particulier sur un plan fixe vertical ou un plan fixe horizontal.

5. Aéronef selon l'une des revendications précédentes, **caractérisé par** au moins l'un des suivants s'applique :
- le fait que l'appareil émetteur (36 ; 152) et/ou l'appareil détecteur (38 ; 152) est (sont) intégré(s) dans la coque (32);
- le dispositif capteur (34 ; 140 ; 150 ; 182, 184) est équipé d'au moins un appareil de chauffage destiné à chauffer l'appareil émetteur (36 ; 152) et/ou l'appareil détecteur (38 ; 152).

6. Aéronef selon l'une des revendications précédentes, **caractérisé par le fait que** le dispositif capteur (34 ; 140 ; 150 ; 182, 184) permet de constater si un rayonnement de l'appareil émetteur (36 ; 152) est orienté vers l'appareil détecteur (38 ; 152) avec positionnement précis ; et que ledit dispositif capteur (34 ; 140 ; 150 ; 182, 184) est muni d'un appareil de réglage (134) couplé audit appareil émetteur (36 ; 152) et/ou audit appareil détecteur (38 ; 152), en vue de réajuster ledit rayonnement en direction dudit appareil détecteur (38 ; 152), il étant de préférence prévu qu'une tache lumineuse du rayonnement, dirigé vers l'appareil détecteur (38 ; 152) par l'appareil émetteur (36 ; 152) puisse être saisie à l'aide d'une caméra, et/ou l'appareil émetteur (36 ; 152) comprend de préférence un détecteur doté d'une multiplicité de zones de détection, par exemple un détecteur à quatre quadrants.

7. Aéronef selon l'une des revendications précédentes, **caractérisé par le fait que** l'appareil émetteur (36 ; 152) comporte au moins une source (42, 44, 46) de lumière laser ; et que, de préférence, des grandeurs caractéristiques au nombre de deux ou plus peuvent être déterminées sur la base du rayonnement de la même source (42, 44, 46) de lumière laser et/ou au moins deux grandeurs caractéristiques peuvent être déterminées de manière simultanée.

8. Aéronef selon l'une des revendications précédentes, **caractérisé par le fait que** l'appareil émetteur (36 ; 152) comporte un multiplexeur optique (64) par l'intermédiaire duquel le rayonnement de plus d'une source lumineuse (42, 44, 46) dudit appareil émetteur (36 ; 152) peut être injecté dans le trajet de mesure (40) ; et que l'appareil détecteur (38 ; 152) comporte un démultiplexeur optique permettant un clivage du rayonnement de différentes sources lumineuses (42, 44, 46).

9. Aéronef selon l'une des revendications précédentes, **caractérisé par** une aptitude du dispositif capteur (34 ; 140 ; 150 ; 182, 184) de déterminer au moins l'un des paramètres suivants :
- au moins une grandeur caractéristique relative à de l'oxygène gazeux, à du dioxyde de carbone, à du méthane et/ou à de l'eau;
- la température, la pression, l'humidité et/ou la teneur en aérosols dans l'air
- la température de l'atmosphère environnante, avec spécification du rapport des intensités d'au moins deux transferts d'énergie dans un gaz de ladite atmosphère environnante;
- l'humidité de l'atmosphère environnante, avec spécification de l'intensité d'au moins un transfert d'énergie dans de la vapeur d'eau renfermée par ladite atmosphère environnante;
- la pression de l'atmosphère environnante, avec spécification de l'intensité d'au moins un transfert d'énergie dans un gaz renfermé par ladite atmosphère environnante, notamment qu'une intensité respective dudit transfert peut être spécifiée au moyen d'un rayonnement, avec modulation s'opérant d'au moins deux façons, et que le rapport des deux intensités est spécifié.

10. Aéronef selon la revendication 9, **caractérisé par le fait que** le dispositif capteur est conçu pour autoriser l'exécution d'une spectroscopie avec modulation f/2f, ou d'une spectroscopie avec modulation en deux tons.

11. Aéronef selon la revendication 9 ou 10, incluant une aile portante, **caractérisé par le fait que** la pression régnant au-dessus et au-dessous de ladite aile portante (18) peut être déterminée, et la pression différentielle peut être constatée sur cette base ; et qu'un message, notifiant une poussée ascensionnelle trop faible, peut être délivré en cas de dépassement négatif d'une pression différentielle de valeur de seuil.

12. Aéronef selon l'une des revendications précédentes, **caractérisé par le fait que**, un message peut être délivré lorsque la démarcation, entre ladite vitesse relative et une vitesse de décrochage dudit aéronef, est inférieure à une différence de vitesse minimale.

13. Aéronef selon l'une des revendications précédentes, **caractérisé par le fait que** l'extinction du rayonnement d'au moins deux sources lumineuses (42, 44, 46) de l'appareil émetteur (36 ; 152) peut être spécifiée, en vue de déterminer la teneur en aérosols et/ou que le dispositif capteur (34 ; 140 ; 150 ; 182, 184) est réalisé de façon telle que la détermination de la température et de la pression de l'atmosphère environnante puisse être effectuée, sur le même gaz, avec la même source lumineuse (42, 44, 46) de l'appareil émetteur (36 ; 152).

14. Aéronef selon l'une des revendications précédentes, **caractérisé par le fait que** le trajet de mesure de référence (72) est situé dans ledit aéronef (10 ; 180).

15. Procédé de spécification de grandeurs caractéristiques de l'atmosphère environnante d'un aéronef qui sont pertinentes pour l'exécution d'un vol, en particulier de la température, de la pression et/ou de l'humidité, en utilisant un dispositif capteur optique spectroscopique comprenant un appareil émetteur et un appareil détecteur, procédé dans lequel il est fait usage d'un dispositif capteur conçu comme un dispositif mesureur d'absorption et un rayonnement parcourt, dudit appareil émetteur audit appareil détecteur, un trajet de mesure situé à l'extérieur d'une coque dudit aéronef, dans lequel une vitesse relative dudit aéronef (10 ; 180) par rapport à l'atmosphère environnante peut être constatée à l'aide du dispositif capteur (34 ; 140 ; 150 ; 182, 184), avec spécification du déphasage Doppler d'au moins un transfert d'un gaz renfermé par ladite atmosphère environnante, **caractérisé par le fait que** le dispositif capteur (34 ; 140 ; 150 ; 182, 184) inclut un trajet de mesure de référence (72), présentant un boîtier (124) et un gaz ou un mélange gazeux renfermé par ce dernier, sachant qu'une partie d'un rayonnement émis par l'appareil émetteur (36 ; 152), à l'adresse de l'appareil détecteur (38 ; 152), est guidée par ledit trajet de mesure de référence (72), et dans lequel ledit gaz ou mélange gazeux du trajet de mesure de référence (72) sert de critère exempt de déphasage Doppler de transferts dans ledit gaz ou mélange gazeux.
